# EUROPÄISCHE PATENTSCHRIFT

(11) **EP 2 480 370 B1**
(45) Veröffentlichungstag und Bekanntmachung des Hinweises auf die Patenterteilung: **29.05.2013**
(21) Anmeldenummer: 10773557.3
(22) Anmeldetag: 08.09.2010
(51) Int. Cl.: B23P 15/00, C21D 9/50, F16C 11/06

(54) **KUGELBOLZEN UND VERFAHREN ZUR HERSTELLUNG DES KUGELBOLZENS**
BALL STUD AND METHOD TO MANUFACTURE THE BALL STUD
BOULON À ROUTULE ET PROCÉDÉ DE FABRICATION DUDIT BOULON

(30) Priorität: 23.09.2009 DE 102009042714
(43) Veröffentlichungstag der Anmeldung: 01.08.2012
(73) Patentinhaber: Ruia Global Fasteners AG, 41462 Neuss (DE)
(72) Erfinder: BONGARTZ, Robert, 41464 Neuss (DE); DOROW, Reiner, 56068 Koblenz (DE); MÜLLER, Kurt, 56727 Mayen (DE)
(74) Vertreter: Beck, Alexander
(86) Internationale Anmeldenummer: PCT/DE2010/050070
(87) Internationale Veröffentlichungsnummer: WO 2011/035780

(56) Entgegenhaltungen:
- EP-A2- 0 082 519
- DE-A1-102004 053 935
- DE-C- 856 256
- JP-A- 7 118 757
- JP-A- 55 054 524
- JP-A- 56 130 432
- JP-A- 2003 120 534
- US-A- 4 160 543
- US-A- 4 623 774

## Beschreibung

### Technisches Gebiet

Die vorliegende Erfindung betrifft Kugelbolzen gemäß dem Oberbegriff des Anspruchs 1 sowie ein Verfahren zur Herstellung eines Kugelbolzens gemäß dem Oberbegriff des Anspruchs 2. Solche Kugelbolzen werden für verschiedene Anwendungen, zum Beispiel Gasdruckfederdämpfer oder Lenksysteme eingesetzt und bedürfen einer hohen Stabilität, da derartige Systeme im Betrieb auf dauernd wechselnde Biegung beansprucht werden. Dabei ist insbesondere der Übergang zwischen Kugel und Schaft einer extrem hohen Belastung ausgesetzt. Dem entsprechend müssen Kugelbolzen so dimensioniert werden, dass sie diesen Belastungen standhalten.

### Stand der Technik

Im Stand der Technik war es bisher nur bekannt, solche Kugelbolzen entweder einstückig zu drehen, was extrem aufwendig bei der Herstellung ist, oder die Teile einfach zu verschweißen. Ein entsprechendes Verschweißen von Kugel und Schaft zu einem Kugelzapfen als rotationssymmetrischem Teil ist beispielsweise aus der DE 856 256 bekannt. In letzterem Falle ereigneten sich häufig Brüche zwischen Schaft und Kugel.

Weiter ist es aus dem Stand der Technik bekannt, Bauteile als Ganzes einer Härtung und/oder einer Randschichtaufhärtung zu unterwerfen, wie dies beispielsweise in der DE 10 2004 053 935 A1 dargestellt ist.

### Darstellung der Erfindung

Ausgehend von diesem Stand der Technik ist es daher Aufgabe der vorliegenden Erfindung, einen Kugelbolzen dergestalt weiterzuentwickeln, dass er eine erheblich höhere Festigkeit, insbesondere eine wesentlich höhere Dauerbiegewechselfestigkeit und damit eine entsprechend höhere Lebensdauer aufweist, und ein Verfahren zur Herstellung eines solchen Kugelbolzens anzugeben.

Die vorliegende Erfindung schlägt zur Lösung dieser Aufgabe erstmals vor, lediglich die Schweißnaht des rotationssymmetrisch verschweißten Teiles und gegebenenfalls deren Umgebung einer Randschichtaufhärtung zu unterwerfen, obwohl dies auf das Vorurteil im Stande der Technik gestoßen ist, dass das Randschichtaufhärten einer Schweißnaht stets kontraproduktiv ist, da dadurch eine Versprödung der Randschicht der Schweißnaht bewirkt wird, die die Schweißnaht bei Zugbelastung brüchig macht.

In vielen Einsatzfällen, wie hier bei einem Kugelbolzen, findet jedoch eine Zugbelastung gar nicht statt, sondern die Lebensdauer des Teils wird durch seine Dauerbiegewechselfestigkeit begrenzt.

Versuche der Patentanmelderin haben ergeben, dass sich durch die erfindungsgemäße Vorgehensweise die Dauerbiegewechselfestigkeit beispielsweise von Kugelbolzen um etwa eine Dekade, also um den Faktor 10, steigern lässt, obwohl gemäß der Meinung der Fachwelt das Randschichtauthärten einer Schweißnaht wegen der resultierenden Versprödung eher nachteilig ist.

Erfindungsgemäß wird diese Aufgabe bei einem gattungsgemäßen Kugelbolzen dadurch gelöst, dass der Hauptbelastungsbereich in der Randfaser dadurch verfestigt ist, dass die Schweißnaht und ihre Umgebung durch Randschichtaufhärten in der Randfaser dergestalt verfestigt ist, dass dort eine Randschichtverfestigung durch Druckeigenspannungen vorliegt.

Dabei ist es besonders bevorzugt, die Randschichtverfestigung durc Randschichtaufhärten mit unmittelbar nachfolgendem Abschrecken der durch das Randschichtaufhärten behandelten Zone herzustellen.

Die vorliegende Erfindung betrifft die Herstellung von Kugelbolzen, die aus einer Kugel und einem Schaft bestehen, die durch eine rotationssymmetrische Schweißnaht verbunden sind. Solche Kugelbolzen unterliegen üblicherweise keiner Zugbelastung, bei der die Randschichtaufhärtung nachteilig sein könnte, sondern ihre Lebensdauer wird ausschließlich durch die Dauerbiegewechselfestigkeit begrenzt. Des Weiteren erlaubt die erfindungsgemäße Herstellungsweise mit einer auf die Schweißnaht und deren unmittelbare Umgebung beschränkten Randschichtaufhärtung den Erhalt des Glanzgrades der Kugel.

Die Herstellung eines erfindungsgemäßen Kugelbolzens kann beispielsweise durch Induktivhärten, Laserhärten oder Plasma-Ionen-Härten durchgeführt werden.

Weiter wird erfindungsgemäß ein Verfahren zur Herstellung eines solchen rotationssymmetrisch verschweißten Teiles angegeben, bei dem nach dem Verschweißen der Einzelteile ein Randschichtaufhärten der Schweißnaht und ihrer Umgebung mit unmittelbar nachfolgendem Abschrecken der durch das Randschichtaufhärten behandelten Zone erfolgt.

### Kurze Beschreibung der Zeichnungen

Die vorliegende Erfindung wird im Folgenden anhand des in der anliegenden Zeichnung dargestellten Ausführungsbeispieles eines Kugelbolzens näher erläutert:

Es zeigt:

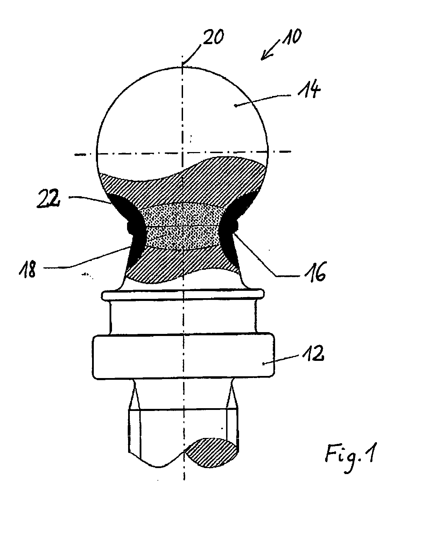

**Fig. 1** einen erfindungsgemäßen Kugelbolzen von der Seite, teilweise geschnitten dargestellt.

### Bester Weg zur Ausführung der Erfindung

Figur 1 zeigt einen erfindungsgemäßen Kugelbolzen 10, der einen Schaft oder Zapfen 12 und eine Kugel 14 umfasst. Der Kugelbolzen 10 ist dabei von der Seite dargestellt, und der hier besonders interessierende Übergangsbereich zwischen Schaft 12 und Kugel 14 ist geschnitten dargestellt.

Auch der hier dargestellte erfindungsgemäße Kugelzapfen 10 ist durch Verschweißen von Kugel 14 und Schaft 12 hergestellt. Die entsprechende Schweißnaht 16 ist in der Schnittdarstellung am Rand erkennbar. Sie verläuft rotationssymmetrisch um die Rotationsachse 20 des Schafts 12.

Das Verschweißen von Kugel und Schaft erzeugt eine Wärmeeinflusszone 18 um die Schweißnaht 16, die in der Schnittdarstellung durch die unterbrochene Schraffierung gekennzeichnet ist und räumlich gesehen etwa als eine Linsenform rotationssymmetrisch zu der Rotationsachse 20 des Schaftes 12 ausgebildet ist. Wie in der Zeichnung erkennbar, weist sie im Schnitt eine symmetrisch elliptische Form auf.

Erfindungsgemäß sind die in der Schnittdarstellung schwarz gezeichneten Bereiche 22 besonders gehärtet, sodass der erfindungsgemäße Kugelbolzen hier optimierte Härtezonen aufweist.

Erfindungsgemäß wird durch eine spezielle Abfolge von Verfahrensschritten nach dem Schweißprozess der Hauptbelastungsbereich der Schweißzone 22 in der Randfaser aufgehärtet, so dass es zu einer Randschichtverfestigung der Schweißnaht 16 und ihrer Umgebung kommt. Dadurch wird erfindungsgemäß eine erhebliche Steigerung der Lebensdauer der Kugelbolzen erreicht, auch wenn diese sehr stark schwingungsbeansprucht sind.

Die erfindungsgemäß besonders bevorzugte Verfahrensweise zur Erzeugung dieser Verfestigung im Hauptbelastungsbereich der Schweißzone 22 läuft wie folgt ab:

Die Kugel 14 wird auf den Zapfen 12 geschweißt. Es entsteht eine rotationssymmetrische Schweißnaht 16. Anschließend wird ein Randschichtaufhärten der Schweißzone 22 mit unmittelbar danach erfolgendem Abschrecken der durch das Randschichtaufhärten behandelten Zone 22 durchgeführt. Das Aufhärten kann dabei beispielsweise durch Induktivhärten, Laserhärten oder Plasma-Ionen-Härtung erfolgen.

Auf diese Weise wird die für Kerbspannungen und Rissbildung besonders empfindliche Schweißzone 22 in ihrer Festigkeit erheblich verbessert. Damit wird die Lebensdauer des Gesamtbauteils wesentlich erhöht.

## Patentansprüche

1. Kugelbolzen (10) aus einer Kugel (14) und einem Schaft (12), die durch eine rotationssymmetrische Schweißnaht (16) verbunden sind, **dadurch gekennzeichnet, dass** lediglich die Schweißnaht (16) und ihre direkte Umgebung (22) nach dem Verschweißen durch Randschichtaufhärten mit unmittelbar nachfolgendem Abschrecken der durch das Randschichtaufhärten behandelten Zone (16, 22) in der Randfaser dergestalt verfestigt ist, dass dort eine Randschichtverfestigung vorliegt.

2. Verfahren zur Herstellung eines Kugelbolzens (10) aus einer Kugel (14) und einem Schaft (12) durch Schweißen einer rotationssymmetrischen Schweißnaht (16) zwischen Kugel (14) und Schaft (12), **dadurch gekennzeichnet, dass** nach dem Verschweißen von Kugel (14) und Schaft (12) ein Randschichtaufhärten der Schweißnaht (16) und ihrer Umgebung (22) mit unmittelbar nachfolgendem Abschrecken der durch das Randschichtaufhärten behandelten Zone (16, 22) erfolgt.

## Claims

1. Ball pin (10) comprising a ball (14) and a shaft (12) which are connected by a rotationally symmetrical welded seam (16), **characterised in that** only the welded seam (16) and its direct surroundings (22) are strengthened after the welding by edge layer hardening directly followed by quenching of the zone (16, 22) treated by the edge layer hardening in the edge fibres in such a manner that an edge layer strengthening is provided there.

2. Method for producing a ball pin (10) comprising a ball (14) and a shaft (12) by welding a rotationally symmetrical welded seam (16) between ball (14) and shaft (12), **characterised in that** after the welding of ball (14) and shaft (12), an edge layer hardening of the welded seam (16) and its surroundings (22) directly followed by quenching of the zone (16, 22) treated by the edge layer hardening is accomplished.

## Revendications

1. Boulon à rotule (10) constitué d'une rotule (14) et d'une tige (12), qui sont reliées par un cordon de soudure (16) à symétrie de révolution, **caractérisé en ce que** le cordon de soudure (16) et son environnement direct (22) sont simplement consolidés après soudage par durcissement des couches marginales suivi directement d'une trempe de la zone (16, 22) traitée par le durcissement des couches marginales dans les fibres marginales de telle sorte qu'il se produise une consolidation des couches marginales.

2. Procédé de fabrication d'un boulon à rotule (10) formé d'une rotule (14) et d'une tige (12) par soudage d'un cordon de soudage à symétrie de révolution (16) entre la rotule (14) et la tige (12), **caractérisé en ce que**, après le soudage de la rotule (14) et de la tige (12), il se produit un durcissement des couches marginales du cordon de soudure (16) et de son environnement (22) suivi directement d'une trempe de la zone (16, 22) traitée par le durcissement des couches marginales.
